# EUROPEAN PATENT SPECIFICATION

(11) **EP 2 170 048 B1**
(45) Date of publication and mention of the grant of the patent: **13.04.2016**
(21) Application number: 07764449.0
(22) Date of filing: 29.06.2007
(51) Int. Cl.: A01N 25/34, A01N 25/10, A01N 53/00, A01N 47/34, A01N 43/653, A01N 43/30, A01P 7/00, D01F 1/10, D06M 23/00

(54) **INSECTICIDAL THREAD**
INSEKTIZIDER FADEN
FIL INSECTICIDE

(43) Date of publication of application: 07.04.2010
(60) Divisional application: 16156291.3
(73) Proprietor: Vestergaard Frandsen SA, 1003 Lausanne (CH)
(72) Inventor: VESTERGAARD FRANDSEN, Mikkel, CH-1003 Lausanne (CH)
(74) Representative: Nielsen, Leif
(86) International application number: PCT/DK2007/000319
(87) International publication number: WO 2009/003468

(56) References cited:
- WO-A-01/37662
- WO-A-98/03718
- WO-A-03/063587
- US-A1- 2007 157 395
- DATABASE WPI Week 199629 Derwent Publications Ltd., London, GB; AN 1996-283981 XP002481885 & JP 08 120524 A (NIPPON ESTER CO LTD) 14 May 1996 (1996-05-14)
- DATABASE WPI Week 199628 Derwent Publications Ltd., London, GB; AN 1996-272959 XP002481886 & JP 08 113828 A (NIPPON ESTER CO LTD) 7 May 1996 (1996-05-07)
- DATABASE WPI Week 199631 Derwent Publications Ltd., London, GB; AN 1996-307145 XP002481887 & JP 08 134720 A (TEIJIN LTD) 28 May 1996 (1996-05-28)
- DATABASE WPI Week 199443 Derwent Publications Ltd., London, GB; AN 1994-347593 XP002481888 & JP 06 272112 A (MITSUBISHI RAYON CO LTD) 27 September 1994 (1994-09-27)

## Description

### FIELD OF THE INVENTION

The present invention relates to insecticidal threads, for example as used for mosquito nets and fabrics.

### BACKGROUND OF THE INVENTION

Different insecticidal treatments of nets and different applications of such nets are disclosed in prior art, for example the general treatment of a netting in International patent application WO01/37662 by Skovmand, the application as a fencing in International patent application WO03/003827 by Bauer and Skovmand, the application as a protective cover in International patent application WO03/090532 by Vestergaard Frandsen.

One of encountered problems for mosquito nets and insecticidal fabrics has turned out in field studies, where it has been found that the efficiency of mosquito nets is reduced when exposed to sunlight or by general exposure to heat. In order to keep a long lasting efficiency, it has been proposed in International patent application WO 03/063587 by Vestergaard Frandsen to incorporate insecticide inside a fibre structure with gradual migration of the insecticide to the surface of the fibre. The mosquito net with registerred trademark Olyset Net® by the company Sumitomo® comprises a monofilament polyethylene yarn with insecticide incorporated in the yarn.

In order to enhance the efficiency on a general basis, synergists have been proposed to be included in fabrics and nettings. For example, in US patent application US 2007/0009563 by Hataipitisuk and in International patent application WO 90/14006 by Mooney et al., PBO is proposed as efficiency enhancer in insecticidal fibres and fabrics. International Patent applications WO06/128867 by Koradin et al. and WO06/128870 by Karl et al. propose PBO as a synergist in fabrics and nettings.

Generally, there is an increased problem with metabolic of insects against insecticides, and Piperonyl Butoxide (PBO) has been proposed for counteracting resistance. In connection with field spraying, PBO is known as a resistance reducer, for example as disclosed in UK patent application 2 388 778 assigned to Rothamsted. US patent 5 503 918 by Samson et al. discloses amylopectin as an insecticidal synergist in tent fabrics, and US 3 859 121 by Yeadon et al. discloses the use of PBO as a synergist in packaging.

When different insecticides are incorporated into a polymer matrix, for example as disclosed in WO03/063587 by Vestergaard Frandsen et al., or if different insecticides are incorporated with a synergist in a polymer matrix for a pet collar, as disclosed in WO6/1247067 by Albright, the migration of the insecticides can be difficult to control, as a migration promoter or inhibitor of one insecticide or synergist may influence the migration of the other insecticide. Thus, if a certain release is desired of different insecticides, this is a difficult to achieve, though highly desired.

Especially in connection with mosquito nets or other forms of fibrous insecticidal barriers, a controlled release of different insecticides or of insecticides in combination with synergists is desirable.

### DESCRIPTION / SUMMARY OF THE INVENTION

It is therefore the object of the invention to provide a method for production of a fibrous product where the release of a combination of an insecticide with another insecticide and/or synergist is controlled in a better way.

This purpose is achieved with an insecticidal thread according to claim 1.

An example of fungal biopesticides for insect combat is described by Thomas and Read in Nature Reviews Microbiology, Vol. 5, May 2007, p.377. Though at present, especially fungal entomopathogens seem the most useful, an insect infecting virus, bacteria or protozoa may be applied, alternatively or in addition.

Alternatively, although not part of the present invention, the first and the second part may be parts of a co-extruded filament. For example, an extruder may be configured to extrude a thread where one side of the thread constitutes the first part, and the second side of the thread may constitute the second part. Another example is a coextruded thread, where the first part surrounds the second part. The latter may be used as a stability enhancing core.

By providing such a thread, the release of the insecticide or synergist in the first and second part, for example type of filaments, can be adjusted independently.

For example, the first part and the second part have different types of insecticide. Alternatively, or in addition, the first and second part have different types of synergists. As another alternative, or in addition, the first and the second part have different types of entomopathogens. As a further alternative, or in addition, the first and the second part have different types of insect sterilising agents.

In certain embodiments of the invention, the first type of filaments may have incorporated therein a first type of insecticide, for example a pyrethroid, with a first migration speed and a first insecticidal efficiency. The second type of filaments may have incorporated therein a synergist, for example PBO, with a second migration speed. In order to achieve the optimal amount of released insecticide and synergist, the first and the second migration speed may be adjusted independently by migration inhibitors or migration promoters, because the migration inhibitors and promoters are present in independent filaments without mutual interference.

Alternatively, the first part may have incorporated therein a first type of insecticide with a first migration speed and a first insecticidal efficiency. The second part may have incorporated therein a second type of insecticide, for example in order to combat insects that are resistant against the first type of insecticide. The release of these two types of insecticide can be adjusted independently, for example by suitable migration promoters or inhibitors.

Other alternatives include different types of insect sterilising agents in the first and second part and/or different entomopathogens in the first and second part. A further alternative includes a sterilising agent only in one of the parts, and or an entomopathogen in one part or the other.

As a further alternative, which is not part of the invention, the first type of filaments, may contain a synergist migratably incorporated in the material of the first type of filaments. The second type of filaments, does not contain any insecticide or synergist but is used to give the thread certain desired physical properties. The entire thread may then be impregnated with an insecticide in order to achieve the desired insecticidal properties. A possible impregnation with a film is disclosed in International patent application WO01/37662 by Skovmand. In order for the synergist, for example PBO, to reach the surface of the thread, the impregnated film must be open for migration of the synergist through the film. Alternative insecticidal coatings applicable in connection with the invention are disclosed in WO 2006/092094 by Liu et al. or in patent application US2007/009563 by Hataipitisuk.

In a preferred embodiment, the thread according to the invention is a single multifilament yarn with a plurality of filaments belonging to the first type of filaments and a plurality of filaments belonging to the second type of filaments. Such yarns can be fabricated by extrusion in an extruder through an extrusion spinneret with a plurality of openings. The material for the first type of filaments is provided over part of the plurality of spinneret openings and the material for the second type of filaments is provided over another part of the plurality of openings. Advantageously, the material for the first type of filaments is identical to the material of the second type of filaments apart from types of insecticide or synergist.

A proper material for extrusion is polypropylene due to the low melting temperature which implies a low risk for evaporation or disintegration of the insecticides and synergists used in the molten polymer during extrusion. However, due to its low flammability and cotton-like feeling, polyester (Polyethylene Terephthalate, PET) is a preferred material for fabrics and nettings for which a thread according to the invention is used. However, the melting temperature of 250°C of polyester implies a risk for disintegration of the insecticide and synergist.

The synergist can be added to the molten polymer through a channel before the polymer transporting spindle, or if only a very short contact time is desired between the hot polymer and the insecticide/synergist, just upstream of the extrusion nozzle or even in the extrusion nozzle. It has been experimentally verified that a sufficient amount of PBO can be incorporated in polyester, especially, if the time for the exposure to that temperature is kept short.

How much this "sufficient amount" of a synergist is, depends on the synergist and the acceptable level of loss. In certain cases, a loss of 99% can be acceptable, if the 1% remaining synergist is still within the range of effective amounts to counteract insecticidal resistance for a long term. In other cases, a loss rate of less than 90% may be acceptable. It has been verified experimentally that for polyester, more than 50% of the synergist stays intact despite an extrusion temperature of more than 250°C.

In addition, the extruded polymer may be actively cooled at a short distance downstream of the extrusion nozzle, for example by a cold air jet.

In an alternative embodiment, the thread is a combination of different type of yarns, where a first yarn consists of only the first type of filaments and a second yarn consists only of the second type of filaments. For example, the thread is a combination, such as a ply, of a first yarn and a second yarn, only.

Different combinations exist, for example the first yarn being a monofilament. An insecticidal monofilament made of polyethylene is known from the Olyset Net® mentioned in the introduction above. The second yarn could be a monofilament as well, for example a polyethylene monofilament with synergist. Alternatively, monofilament yarns may be combined with multifilament yarns. Not only may yarns be plied with different numbers of filaments, but also the materials may be different. For example, a stiff polyester yarn may be combined with a multifilament polyester yarn by plying techniques in order to achieve a combination of the advantages of each yarn.

The thread according to the invention is not limited to two type of filaments but may also comprise further types of filaments. In a further embodiment, the type of insecticide or synergist in the further type of filaments is different from the types of insecticide or synergist of the first and second type of filaments.

In the plying technique as well as in the extrusion technique of a single multi-filament yarn, the amount of insecticide relative to the amount of synergist can be adjusted independently. In the plying technique, the thickness of the first yarn relative to the thickness of the second yarn can be varied in different plying techniques. In the extrusion of a multifilament yarn, the amount of insecticidal polymer relative to the amount of synergistic polymer in the extruder may be variably adjusted to cover a predetermined number of openings in the extrusion spinneret. The result is an adjustment of the number of insecticidal filaments relative to the number of synergistic filaments. In the case of a co-extruded monofilament, the ratio of the cross sectional area between the first and the second part may be adjusted to advantageously corresponding to the desired long term release rate.

As it appears from the foregoing for certain embodiments, the first type of filaments may contain an insecticide but no synergist, and the second type of filaments may contain a synergist but no insecticide or, at least, not the insecticide of the first type of filaments. However, other alternatives are possible, for example, different types and/or combinations of insecticides, insect sterilising agents, entomopathogen, and/or synergists or combinations thereof in the second type of filaments than in the first type.

In a further embodiment, the thread comprises a third type of filaments containing a second or third insecticide or further combination of insecticides different from the first insecticide. Also, the third type of filaments may contain a different type of insect sterilising agent, entomopathogen, or synergist or combination thereof,

As mentioned in the foregoing, co-extruding may be used for providing a thread, which however is not according to the present invention. The thread may be a co-extruded monofilament with the first part and the second part in the monofilament or may comprise a co-extruded filament among other filaments, for example monofilament or multi-filaments. Different co-extrusion techniques may be applied, for example wherein the first part is a shell around the second part or wherein the first part and the second part extend from the centre of the monofilament to the rim of the monofilament. The first part and the second part may be made of the same polymer, or alternatively, contain different polymers. Also, as already described above, the first part and the second part may contain different insecticides, for example in order to counteract insecticidal resistance or to combat insects with sensitivities different for the different insecticides. Alternatively, the first part contains a first insecticide but no synergist, and the second part contain a synergist, for example PBO, with or without insecticide. In addition, the first part and the second part contain different insect sterilising agents, entomopathogen, synergists or combinations thereof, as already indicated above.

Additional parts of the thread may contain different agents. For example one part may contain a synergist, another part may contain insecticide, a third part may contain an entomopathogen, and a fourth part may contain a sterilising agent. Alternatively, the thread may contain only three of these four agents.

In order to protect the insecticides in parts of the thread, these contain advantageously a UV protecting agent for protection of the insecticide from UV degradation.

Typical use of a thread according to the invention includes insecticidal barriers, for example mosquito nets, and woven or knitted fabrics or on-wovens of various kinds. Another application is for Dumuria fabrics or nettings, especially texturised woven fabrics. Commercially, these are available under the trademark PermaNet® Dumuria.

Other uses include a fencing, for example as disclosed in International patent application WO03/003827 by Bauer and Skovmand, application as a protective cover, for example as disclosed in International patent application WO03/090532 by Vestergaard Frandsen, or application as an air cleaning net, for example as disclosed in International patent application WO06/024304 by Vestergaard Frandsen.

As already apparent from the foregoing, the term synergist comprises one synergist or a plurality of synergists, where the plurality of synergist may be a mixture but need not be so. The term insecticide covers one insecticide or a plurality of insecticides, where the plurality of insecticides may be a mixture but need not be so. For example, a pyrethroid may be combined with carbamates or organophosphates in order to combat resistant insects as well.

In addition to the insecticides and/or synergists incorporated into the material, the material may have incorporated therein or impregnated on the surface thereof other relevant components, for example conductivity-enhancing agents to prevent static electricity, flame retardants, anti-soiling agents, antifouling agents, further biocides, pigments and dyestuffs.

Preferably, the insecticide in connection with the invention is a pyrethroid, preferably deltamethrin or permethrin, but other pyrethroids may apply as well, as disclosed as a list in WO 01/37662. However, the invention applies as well in connection with cabamates or organophosphates in the composition for impregnation. A more extensive list of possible insecticide is found in WO 01/37662 or in WO 06/128870 also containing examples of repellents.

Where nets are used in mass campaigns, an alternative or supplemental insecticide may also be a sterilising agent with a sterilising effect thus to sterilise the mosquitoes and avoid the next generation of mosquitoes. Such insecticides can be of the benzoyl urea group or triazins.

Further possible combinations include metaflumizone as disclosed in WO 06/127407, N-arylhydrazine as disclosed in WO06128870 or derivatives of 1-Phenyltriazole as disclosed in WO06128867, for example combined with a pyrethroid.

Other synergists than the above mentioned PBO are Sulfoxide, Tropital, Bucarpolate, ethion, profenofos, or dimethoate, Piperonyl Cylonene, TPP, Di-ethyl maleate, NIA-16388 (NIA), S-421, MGK-264 (bicycloheptenedicarboximide), S,S,S-tributyl phosphorotrithoate (DEF), - N-Octylbicycloheptene dicarboxaminde, Sesamin, Sesamolin, or Sesamex.

As a further alternative, the thread may be provided with a first insecticide incorporated into the polymer matrix and with an insecticidal film in addition, for example the film containing another insecticide. In the case of migration of synergist and/or insecticide in the thread, it is important to take into account the migration speed of the synergist and/or insecticide in the matrix and the migration speed of the further synergists or insecticides. For example, this may be regulated by a proper choice of selectively working migration promoters and migration inhibitors.

### SHORT DESCRIPTION OF THE DRAWINGS

The invention will be explained in more detail with reference to the drawing, where
FIG. 1 is an illustration of a thread according to the invention with two different monofilament yarns;
FIG. 2 illustrates the first yarn with migrating insecticide
FIG. 3 is an illustration of a thread according to the invention with one monofilament yarn and one multifilament yarn;
FIG. 4 is an illustration of a thread being a multifilament yarn;
FIG. 5 is an illustration of an extrusion process.
FIG. 6 is an illustration of a thread according to the invention with different types of yarns and an insecticidal coating,
FIG. 7 illustratates co-extrusion of a thread,
FIG. 8 illustrates various types of co-extruded threads.

### DETAILED DESCRIPTION / PREFERRED EMBODIMENT

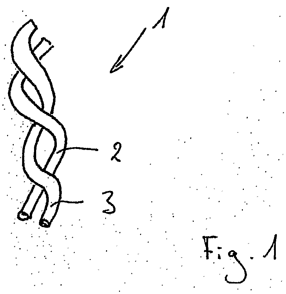

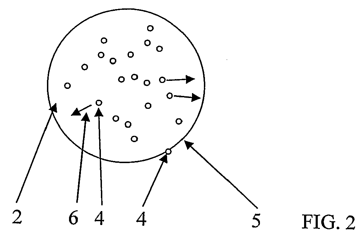

In FIG. 1, a thread 1 according to the inventions is illustrated. The thread contains a first monofilament 2 and a second filament 3 together forming the thread. As illustrated in FIG. 2, the first thread 2 comprises an insecticide 4, an insect sterilising agent, and/or an entomopathogen, and/or synergist that is migratably incorporated in the thread 2. The insecticide 4 migrates from the interior of the thread 2 to the surface 5 of the thread, which is illustrated by arrow 6. Once being located on the surface of the thread, the insecticide 4 may be taken up by an insect. The second thread 3 may comprise a second insecticide, insect sterilising agent, entomopathogen, or synergist.

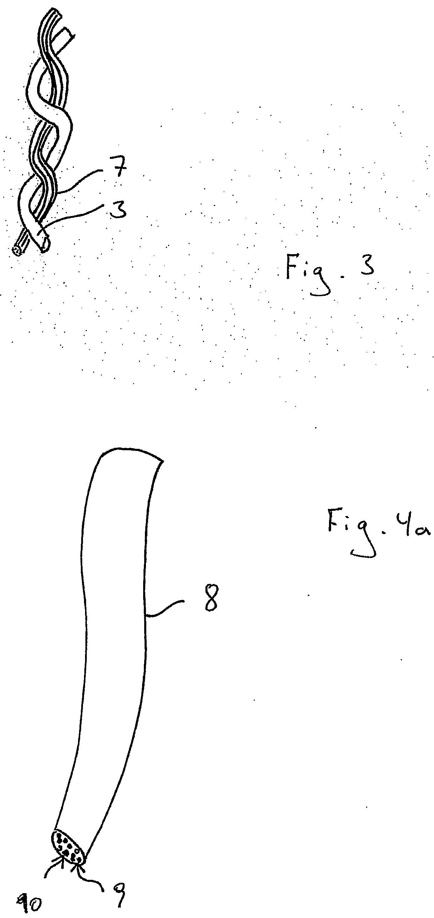

FIG. 3 illustrates a further embodiment, where the first yarn 7 is a multifilament yarn combined with a second yarn 3, which is a monofilament.

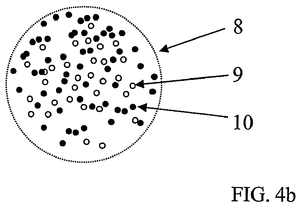

FIG. 4a and in enlarged form in FIG. 4b illustrates a thread which is a single multi-filament yarn 8 with a large number of a first type of filaments 9 containing an insecticide and a large number of second type of filaments 10 containing a synergist.

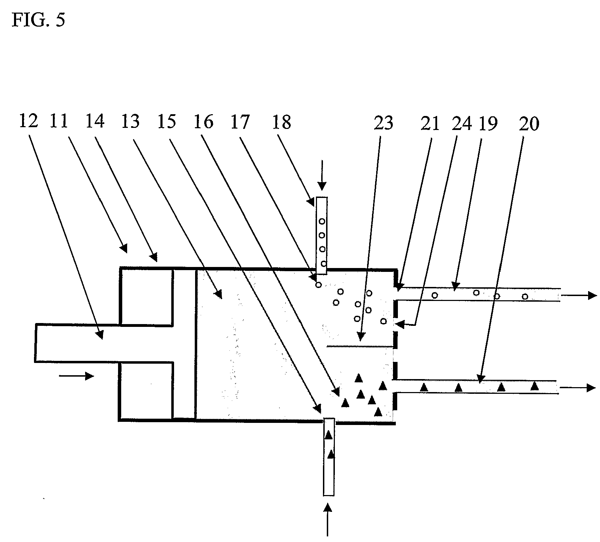

Such multi-filaments can be produced by extrusion as illustrated in FIG. 5. In an extruder 11, a piston 12 pushes molten polymer 13 from inside a housing 14 and through openings 24. From one supply tube 18, insecticide 17 is supplied into the molten polymer 13 and from a second supply tube 15, synergist 16 is supplied into the molten polymer. Due to the different location of the insecticide and the synergist, the extruded polymer in the lower flow 20 contains synergist and the extruded polymer in the upper flow 19 contains insecticide. A number of opening 24 may be provided in order to produce multi-filaments with a high number of filaments at the same time. A partition wall 23 may prevent mixing of the insecticide 17 and the synergist 16.

Alternatively, not illustrated however, there may be provided a first molten polymer with insecticide to the nozzle from a first extruder cavity and a second molten polymer with synergist from a second extruder cavity. The two polymers may be added to different part of the nozzle in order to provide multifilaments of two types from the same nozzle. As an alternative to the synergist or in addition, an insect sterilising agent or an entomopathogen may be included

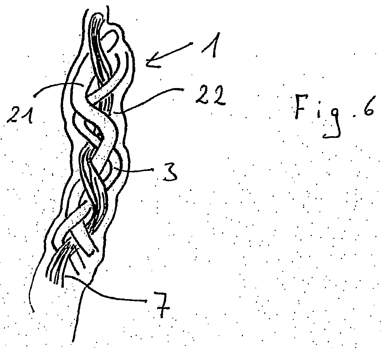

FIG. 6 illustrates a thread 1 with a number of yarns, a first yarn 7, which is a multi-filament yarn comprising a first insecticide, a second yarn 3 comprising a synergist, and a third yarn 21 without insecticide or synergist but adding special physical properties to the yarn, for example increased strength. The thread 1 is coated with a wash protecting film 22 containing a further insecticide and allowing the synergist and the first insecticide to migrate through the film 22.

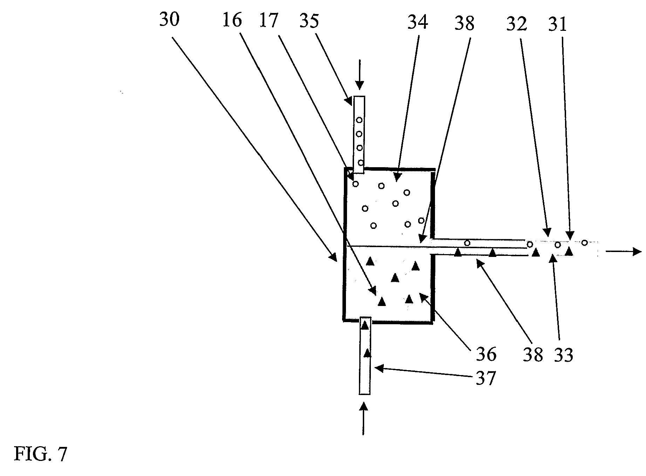

FIG. 7 illustrates a co-extruder 30 for a monofilament 31 with one part 32 containing polymer 17 and a second part 33 with synergist 16. Molten polymer 34 containing insecticide 17 is supplied under pressure via a first tube 35, and molten polymer 36 containing synergist 16 is supplied via a second tube 37. A partition wall 38 is extending into the nozzle 39 prevents the two different molten polymers 32, 33 to be mixed before extrusion.

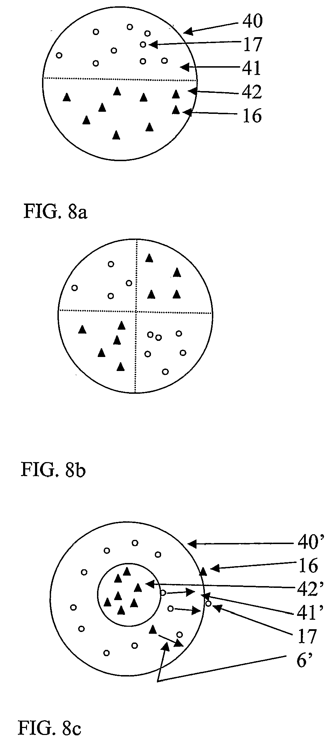

The co-extrusion method may be used to provide a monofilament 40, as illustrated in FIG. 8a, with two cross-sectional halves, where the first half 41 comprises insecticide 17 and the second half 42 comprises synergist 16. The monofilament may contain more than two cross sectional parts, for example four, as illustrated in FIG. 8b, or more.

As illustrated in FIG. 8c, the monofilament 40' may comprise a first part 41' surrounding a second part 42', which constitutes a central core for the filament 40', for example with special mechanical properties. The core 42' contains synergist 16, which is migrating 6' through the first part 41' to the surface of the filament. Likewise, the insecticide 17 is migrating to the surface of the monofilament 40'.

## Claims

1. An insecticidal thread (1) having a first (2, 7, 21) and a second (3) cross sectional part, the first part having an insecticide (4), an insect sterilising agent, an entomopathogen, or a synergist or a combination thereof incorporated in a polymeric material of the first part, the second part having an insecticide, an insect sterilising agent, an entomopathogen, or synergist or a combination thereof incorporated in a polymeric material of the second part, wherein the type of insecticide, insect sterilising agent, entomopathogen, or synergist or combination thereof in the second part is different from the type of insecticide, insect sterilising agent, entomopathogen, or synergist or combination thereof in the first part, **characterised in that** the first part is a first type of filaments (9) and the second part is a second type of filaments (10).

2. An insecticidal thread according to claim 1, wherein the thread (1) comprises a multifilament yarn (7, 8) having a plurality of filaments of the first type of filaments (9).

3. An insecticidal thread according to claim 2, wherein the multifilament yarn (7, 8) also has a plurality of filaments of the second type of filaments (10).

4. An insecticidal thread according to claim 3, wherein the multifilament yarn (7) is a single multifilament (8) with a plurality of filaments belonging to the first type of filaments (9) and a plurality of filaments belonging to the second type of filaments (10).

5. An insecticidal thread according to claim 1, wherein the thread (1) is a combination of a first yarn (2) and a second yarn (3), the first yarn consisting of only the first type of filaments (9) and the second yarn consisting only of the second type of filaments (10).

6. An insecticidal thread according to claim 5, wherein the second yarn (3) is a monofilament.

7. An insecticidal thread according to claim 1, wherein the thread (1) is a ply yarn of a first monofilament yarn of the first type of filaments (9) and a second monofilament yarn of the second type of filaments (10).

8. An insecticidal thread according to any preceding claim, comprising at least one further type of filaments (21), the type of insecticide or synergist in the further type of filaments being different from the type of insecticide or synergist of the first (9) and second (10) type of filaments.

9. An insecticidal thread according to any preceding claim, wherein the first type of filaments (9) contains an insectide (4), and the second type of filaments (10) contains a synergist.

10. An insecticidal thread according to claim 9, wherein the first type of filaments (9) contains a first insecticide but no synergist, and the second type of filaments (10) contains a synergist.

11. An insecticidal thread according to claim 10, wherein the second type of filaments (10) does not contain the first insecticide.

12. An insecticidal thread according to claim 11, wherein the second type of filaments (10) contains a second insecticide different from the first insecticide.

13. An insecticidal thread according to claim 10, 11, or 12, wherein the thread (1) comprises a third type (21) of filaments containing an insecticide different from the first insecticide.

14. An insecticidal thread according to any preceding claim, wherein the insecticide or insecticides (17) and the synergist (16) are incorporated migratably in a polymeric material of the thread for gradual migration from inside the material to the surface (5) of the material.

15. An insecticidal thread according to any preceding claim, wherein the polymeric material comprises a UV protecting agent for protection of the insecticide from UV degradation.

16. An insecticidal thread according to any preceding claim, wherein the thread (1) is coated with an insecticidal film (22).

17. An insecticidal thread according to claim 16, wherein the material is polyester.

18. An insecticidal thread according to any preceding claim, wherein the first type of filaments (9) contains a pyrethroid.

19. An insecticidal thread according to any preceding claim, wherein the second type of filaments (10) contains PBO.

20. An insecticidal thread according to claim 13, wherein the first part (2, 7, 21) and the second part (3) contain different polymers.

21. An insecticidal thread according to claims 1, wherein the thread (1) comprises at least one coextruded monofilament and comprises at least one multifilament.

22. An insecticidal thread according to claim 21, wherein the monofilament is made of a different polymer than the multifilament.

23. An insecticidal thread according to claim 22, wherein the monofilament is made of polyethylene.

24. An insecticidal thread according to claim 22 or 23, wherein the multifilament is made of polyester.

25. Use of a thread according to any preceding claims for an insecticidal barrier.

26. Use according to claim 25, wherein the insecticidal barrier is a mosquito net.

## Patentansprüche

1. Insektizider Faden (1) mit einem ersten (2, 7, 21) und einen zweiten (3) Querschnittsteil, wobei der erste Teil ein Insektizid (4), ein Insektensterilisationsmittel, ein Entomopathogen oder ein Synergist oder eine Kombination davon in einem Polymermaterial des ersten Teils inkorporiert hat, wobei der zweite Teil ein Insektizid, ein Insektensterilisationsmittel, ein Entomopathogen, Synergist oder eine Kombination davon in einem Polymermaterial des zweiten Teils inkorporiert hat, wobei sich der Typ des Insektizids, Insektensterilisationsmittels, Entomopathogens oder Synergists oder der Kombination davon des zweiten Teils vom Typ des Insektizids, Insektensterilisationsmittels, Entomopathogens, Synergist oder der Kombination davon des ersten Teils unterscheidet, **dadurch gekennzeichnet, dass** der erste Teil ein erster Filamenttyp (9) und der zweite Teil ein zweiter Filamenttyp (10) ist.

2. Insektizider Faden nach Anspruch 1, wobei der Faden (1) ein Multifilamentgarn (7, 8) mit einer Vielzahl von Filamenten des ersten Filamenttyps (9) ist.

3. Insektizider Faden nach Anspruch 2, wobei das Multifilamentgarn (7, 8) auch eine Vielzahl von Filamenten des zweiten Filamenttyps (10) aufweist.

4. Insektizider Faden nach Anspruch 3, wobei das Multifilamentgarn (7) ein einziges Multifilament (8) mit einer Vielzahl von Filamenten des ersten Filamenttyps (9) und einer Vielzahl von Filamenten des zweiten Filamenttyps (10) ist.

5. Insektizider Faden nach Anspruch 1, wobei der Faden (1) eine Kombination von einem ersten Faden (2) und einem zweiten Faden (3) ist, wobei der erste Faden nur aus dem ersten Filamenttyp (9) und der zweite Faden nur aus dem zweiten Filamenttyp (10) besteht.

6. Insektizider Faden nach Anspruch 5, wobei der zweite Faden (3) ein Monofilament ist.

7. Insektizider Faden nach Anspruch 1, wobei der Faden (1) ein Zwirn aus einem ersten Monofilamentgarn des ersten Filamenttyps (9) und einem zweiten Monofilamentgarn des zweiten Filamenttyps (10) ist.

8. Insektizider Faden nach einem der vorhergehenden Ansprüche, der mindestens einen weiteren Filamenttyp (21) enthält, wobei der Typ des Insektizids oder Synergisten in dem weiteren Filamenttyp sich vom Typ des Insektizids oder Synergisten des ersten (9) und zweiten (10) Filamenttyps unterscheidet.

9. Insektizider Faden nach einem vorangehenden Anspruch, wobei der erste Filamenttyp (9) ein Insektizid (4) und der zweite Filamenttyp (10) einen Synergisten enthält.

10. Insektizider Faden nach Anspruch 9, wobei der erste Filamenttyp (9) ein erstes Insektizid aber kein Synergist und der zweite Filamenttyp (10) einen Synergist enthält.

11. Insektizider Faden nach Anspruch 10, wobei der zweite Filamenttyp (10) nicht das erste Insektizid enthält.

12. Insektizider Faden nach Anspruch 11, wobei der zweite Filamenttyp (10) ein zweites Insektizid enthält, dass sich vom ersten Insektizid unterscheidet.

13. Insektizider Faden nach Anspruch 10, 11 oder 12, wobei der Faden (1) einen dritten Filamenttyp (21) enthält mit einem Insektizid, dass sich vom ersten Insektizid unterscheidet.

14. Insektizider Faden nach einem der vorhergehenden Ansprüche, wobei das Insektizid oder die Insektiziden (17) und der Synergist (16) migrierbar in ein polymeres Material des Fadens inkorporiert ist für eine schrittweise Migration von Inneren des Materials an die Oberfläche (5) des Materials.

15. Insektizider Faden nach einem vorangehenden Anspruch, wobei das Polymermaterial ein UV-Schutzmittel zum Schutz des Insektizids gegen UV induzierten Abbau aufweist.

16. Insektizider Faden nach einem der vorhergehenden Ansprüche, wobei der Faden (1) mit einem insektiziden Film (22) beschichtet ist.

17. Insektizider Faden nach Anspruch 16, wobei das Material Polyester ist.

18. Insektizider Faden nach einem vorangehenden Anspruch, wobei der erste Filamenttyp (9) ein Pyrethroid enthält.

19. Insektizider Faden nach einem vorangehenden Anspruch, wobei der zweite Filamenttyp (10) PBO enthält.

20. Insektizider Faden nach Anspruch 13, wobei der erste Teil (2, 7, 21) und der zweite Teil (3) unterschiedliche Polymere enthalten.

21. Insektizider Faden nach Anspruch 1, wobei der Faden (1) mindestens ein co-extrudiertes Monofilament und mindestens ein Multifilament enthält.

22. Insektizider Faden nach Anspruch 21, wobei das Monofilament aus einem anderen Polymer als das Multifilament hergestellt ist.

23. Insektizider Faden nach Anspruch 22, wobei das Monofilament aus Polyethylen hergestellt ist.

24. Insektizider Faden nach Anspruch 22 oder 23, wobei das Multifilament aus Polyester hergestellt ist.

25. Verwendung eines Fadens gemäß einem der vorhergehenden Ansprüche für eine insektizide Barriere.

26. Verwendung nach Anspruch 25, wobei die insektizide Barriere ein Moskitonetz ist.

## Revendications

1. Fil insecticide (1) ayant une première (2, 7, 21) et une deuxième (3) partie à section transversale, la première partie ayant un insecticide (4), un agent de stérilisation d'insectes, un entomopathogène ou un synergiste ou une combinaison de ceux-ci incorporée dans un matériau polymère de la première partie, la deuxième partie ayant un insecticide, un agent de stérilisation d'insectes, un entomopathogène ou un synergiste ou une combinaison de ceux-ci incorporée dans un matériau polymère de la deuxième partie, le type d'insecticide, d'agent de stérilisation d'insectes, d'entomopathogène ou de synergiste ou une combinaison de ceux-ci dans la deuxième partie étant différent du type d'insecticide, d'agent de stérilisation d'insectes, d'entomopathogène ou de synergiste ou une combinaison de ceux-ci dans la première partie, **caractérisé en ce que** la première partie est un premier type de filaments (9) et la deuxième partie est un deuxième type de filaments (10).

2. Fil insecticide selon la revendication 1, dans lequel le fil (1) comprend un fil multifilament (7, 8) ayant une pluralité de filaments du premier type de filaments (9).

3. Fil insecticide selon la revendication 2, dans lequel le fil multifilament (7, 8) a aussi une pluralité de filaments du deuxième type de filaments (10).

4. Fil insecticide selon la revendication 3, dans lequel le fil multifilament (7) est un multifilament individuel (8) avec une pluralité de filaments appartenant au premier type de filaments (9) et une pluralité de filaments appartenant au deuxième type de filaments (10).

5. Fil insecticide selon la revendication 1, dans lequel le fil (1) est une combinaison d'un premier fil (2) et d'un deuxième fil (3), le premier fil étant seulement composé du premier type de filaments (9) et le deuxième fil étant seulement composé du deuxième type de filaments (10).

6. Fil insecticide selon la revendication 5, dans lequel le deuxième fil (3) est un monofilament.

7. Fil insecticide selon la revendication 1, dans lequel le fil (1) est un fil retors d'un premier fil monofilament du premier type de filaments (9) et un deuxième fil monofilament du deuxième type de filaments (10).

8. Fil insecticide selon l'une quelconque des revendications précédentes, comprenant au moins un autre type de filaments (21), le type d'insecticide ou de synergiste dans l'autre type de filaments étant différent du type d'insecticide ou de synergiste du premier (9) et du deuxième (10) type de filaments.

9. Fil insecticide selon l'une quelconque des revendications précédentes, dans lequel le premier type de filaments (9) contient un insecticide (4) et le deuxième type de filaments (10) contient un synergiste.

10. Fil insecticide selon la revendication 9, dans lequel le premier type de filaments (9) contient un premier insecticide, mais pas de synergiste, et le deuxième type de filaments (10) contient un synergiste.

11. Fil insecticide selon la revendication 10, dans lequel le deuxième type de filaments (10) ne contient pas le premier insecticide.

12. Fil insecticide selon la revendication 11, dans lequel le deuxième type de filaments (10) contient un deuxième insecticide différent du premier insecticide.

13. Fil insecticide selon la revendication 10, 11 ou 12, dans lequel le fil (1) comprend un troisième type (21) de filaments contenant un insecticide différent du premier insecticide.

14. Fil insecticide selon l'une quelconque des revendications précédentes, dans lequel l'insecticide ou les insecticides (17) et le synergiste (16) sont incorporés par migration dans un matériau polymère du fil pour la migration graduelle de l'intérieur du matériau vers la surface (5) du matériau.

15. Fil insecticide selon l'une quelconque des revendications précédentes, dans lequel le matériau polymère comprend un agent de protection contre les UV destiné à protéger 1"insecticide de la dégradation due aux UV.

16. Fil insecticide selon l'une quelconque des revendications précédentes, dans lequel le fil (1) est revêtu d'un film insecticide (22).

17. Fil insecticide selon la revendication 16, dans lequel le matériau est du polyester.

18. Fil insecticide selon l'une quelconque des revendications précédentes, dans lequel le premier type de filaments (9) contient un pyréthrinoïde.

19. Fil insecticide selon l'une quelconque des revendications précédentes, dans lequel le deuxième type de filaments (10) contient du PBO.

20. Fil insecticide selon la revendication 13, dans lequel la première partie (2, 7, 21) et la deuxième partie (3) contiennent différents polymères.

21. Fil insecticide selon la revendication 1, dans lequel le fil (1) comprend au moins un monofilament coextrudé et comprend au moins un multifilament.

22. Fil insecticide selon la revendication 21, dans lequel le monofilament est constitué d'un polymère différent du multifilament.

23. Fil insecticide selon la revendication 22, dans lequel le monofilament est constitué de polyéthylène.

24. Fil insecticide selon la revendication 22 ou 23, dans lequel le multifilament est constitué de polyester.

25. Utilisation d'un fil selon l'une quelconque des revendications précédentes pour une barrière insecticide.

26. Utilisation selon la revendication 25, dans lequel la barrière insecticide est une moustiquaire.
